# EUROPEAN PATENT APPLICATION

(11) **EP 4 311 309 A1**
(43) Date of publication of application: **24.01.2024**
(21) Application number: 22842399.2
(22) Date of filing: 11.07.2022
(51) Int. Cl.: H04W 36/00, H04W 36/08, H04W 36/16

(54) **METHOD AND APPARATUS FOR PERFORMING MULTI-HOP CONDITIONAL HANDOVER IN NEXT GENERATION MOBILE COMMUNICATION SYSTEM**

(30) Priority: 13.07.2021 KR 20210091725
(71) Applicant: Samsung Electronics Co., Ltd., Suwon-si, Gyeonggi-do 16677 (KR)
(72) Inventor: KIM, Sangbum, Suwon-si, Gyeonggi-do 16677 (KR); OCK, Jinwoo, Suwon-si, Gyeonggi-do 16677 (KR); HWANG, June, Suwon-si, Gyeonggi-do 16677 (KR)
(74) Representative: Gulde & Partner
(86) International application number: PCT/KR2022/010057
(87) International publication number: WO 2023/287137

(57) **Abstract**

The present disclosure relates to a 5G or pre-5G communication system for supporting a higher data transmission rate than a 4th generation (4G) communication system such as long term evolution (LTE). The present disclosure relates to a method for processing a control signal in a wireless communication system, and may comprise the steps of: receiving a first control signal being transmitted from a base station; processing the received first control signal; and transmitting, to the base station, a second control signal generated on the basis of the processing.

## Description

### [Technical Field]

The disclosure relates to a method and apparatus for performing a multi-hop conditional handover (CHO) in a mobile communication system.

### [Background Art]

To meet the ever increasing demand for wireless data traffic since commercialization of 4^{th} generation (4G) communication systems, efforts have been made to develop improved 5^{th} generation (5G) or pre-5G communication systems. As such, 5G or pre-5G communication systems are also called "beyond 4G network system" or "post Long Term Evolution (LTE) system".

To achieve high data rates, 5G communication systems are being considered for implementation in the extremely high frequency (mmWave) band (e.g., 60 GHz band). To decrease path loss of radio waves and increase the transmission distance in the mmWave band, various technologies including beamforming, massive multiple-input multiple-output (massive MIMO), full dimensional MIMO (FD-MIMO), array antennas, analog beamforming, and large scale antennas are considered for 5G communication systems.

To improve system networks in 5G communication systems, technology development is under way regarding evolved small cells, advanced small cells, cloud radio access networks (cloud RANs), ultra-dense networks, device-to-device (D2D) communication, wireless backhaul, moving networks, cooperative communication, coordinated multi-points (CoMP), interference cancellation, and the like.

Additionally, advanced coding and modulation (ACM) schemes such as hybrid frequency shift keying and quadrature amplitude modulation (FQAM) and sliding window superposition coding (SWSC), and advanced access technologies such as filter bank multi carrier (FBMC), non-orthogonal multiple access (NOMA), and sparse code multiple access (SCMA) are also under development for 5G systems.

Meanwhile, in conditional handover (CHO) operation unlike a normal handover, although a terminal receives configuration information instructing handover execution from the base station, the handover operation is not immediately executed, but rather, the handover operation is executed when a preset condition is met. That is, since the terminal can quickly identify a change in channel quality status, it may be advantageous for the terminal to determine the point in time to initiate the handover operation to minimize the probability of handover failure.

### [Disclosure of Invention]

### [Technical Problem]

When a terminal moves, the base station should transmit configuration information for performing a handover to the terminal. When one or more terminals on board a transportation means are moved, downlink signaling that transmits configuration information for performing a handover in the cell boundary area may increase. In this case, problems such as increased signal interference, shortage of radio resources, and transmission delay may arise in the cell boundary area. Accordingly, the disclosure proposes an apparatus and method for minimizing downlink signaling related to handover.

### [Solution to Problem]

A method performed by a terminal in a wireless communication system may include: receiving a first control message for a handover to one or more target cells from a source cell; performing, in case that a condition for a handover to one of the target cells is satisfied, a handover to the target cell; and maintaining, after the handover to the target cell is completed, without deleting, handover configuration information related to a multi-hop conditional handover (MH-CHO) among the handover configuration information for each of the target cells included in the first control message.

A method performed by a base station in a wireless communication system may include: determining to trigger a multi-hop conditional handover (MH-CHO) to a terminal; transmitting a handover request message including an indication instructing execution of a MH-CHO to one or more candidate target base stations; receiving a handover request response message from the candidate target base stations in response to the handover request message; generating, based on the handover request response message, a first control message for the terminal to execute a handover to the candidate target base stations; and transmitting the first control message to the terminal.

A terminal in a wireless communication system may include: a transceiver capable of transmitting and receiving at least one signal; and a controller coupled to the transceiver, wherein the controller may be configured to receive a first control message for a handover to one or more target cells from a source cell, perform, in case that a condition for a handover to one of the target cells is satisfied, a handover to the target cell, and maintain, after the handover to the target cell is completed, without deleting, handover configuration information related to a multi-hop conditional handover (MH-CHO) among the handover configuration information for each of the target cells included in the first control message.

A base station in a wireless communication system may include: a transceiver capable of transmitting and receiving at least one signal; and a controller coupled to the transceiver, wherein the controller may be configured to determine to trigger a multi-hop conditional handover (MH-CHO) to a terminal, transmit a handover request message including an indication instructing execution of a MH-CHO to one or more candidate target base stations, receive a handover request response message from the candidate target base stations in response to the handover request message, generate, based on the handover request response message, a first control message for the terminal to execute a handover to the candidate target base stations, and transmit the first control message to the terminal.

### [Advantageous Effects of Invention]

According to an embodiment of the disclosure, downlink signaling that transmits configuration information for performing a handover in a mobile communication system can be minimized.

### [Brief Description of Drawings]

FIG. 1 is a diagram illustrating the architecture of a next-generation mobile communication system according to an embodiment of the disclosure.
FIG. 2 is a diagram for explaining radio connection state transitions in a next-generation mobile communication system according to an embodiment of the disclosure.
FIG. 3 is a sequence diagram of a process for performing first handover operation in a mobile communication system according to an embodiment of the disclosure.
FIG. 4 is a sequence diagram of a process for performing second handover (conditional handover) operation in a mobile communication system according to an embodiment of the disclosure.
FIG. 5 is a diagram illustrating a case in which handover signaling occurs intensively in a mobile communication system according to an embodiment of the disclosure.
FIG. 6 is a diagram for conceptually explaining a multi-hop conditional handover in a mobile communication system according to an embodiment of the disclosure.
FIG. 7 is a sequence diagram of a process for performing a multi-hop conditional handover operation in a mobile communication system according to an embodiment of the disclosure.
FIG. 8 is a diagram illustrating a method of providing condition-related configuration information in a multi-hop conditional handover according to an embodiment of the disclosure.
FIG. 9 is a flowchart of UE operation for performing a multi-hop conditional handover in a mobile communication system according to an embodiment of the disclosure.
FIG. 10 is a flowchart of base station operation for performing a multi-hop conditional handover in a mobile communication system according to an embodiment of the disclosure.
FIG. 11 is a block diagram illustrating the internal structure of a user equipment to which the disclosure is applied.
FIG. 12 is a block diagram illustrating the configuration of a base station according to the disclosure.

### [Mode for the Invention]

Hereinafter, the operating principle of the present disclosure will be described in detail with reference to the accompanying drawings. In explaining the disclosure below, descriptions of well-known functions and structures incorporated herein may be omitted to avoid obscuring the subject matter of the disclosure. The terms described below are defined in consideration of their functions in the disclosure, and these may vary depending on the intention of the user, the operator, or the custom. Hence, their meanings should be determined based on the overall contents of this specification.

In the following description of the disclosure, if a detailed description of a well-known function or structure is judged to unnecessarily obscure the gist of the disclosure, the detailed description will be omitted. Next, embodiments of the disclosure will be described with reference to the accompanying drawings.

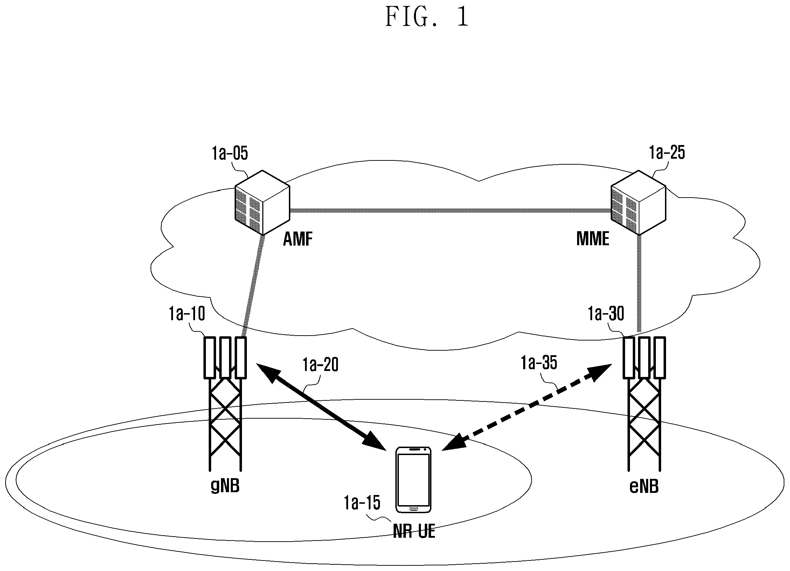

FIG. 1 is a diagram illustrating the architecture of a next-generation mobile communication system according to an embodiment of the disclosure.

With reference to FIG. 1, as shown, the radio access network of the next-generation mobile communication system (New Radio, NR) may be composed of a next-generation base station (NR node B, hereinafter gNB) 1a-10 and an NR core network (AMF) 1a-05. An NR user equipment (hereinafter, NR UE or terminal) 1a-15 connects to an external network through the gNB 1a-10 and the AMF 1a-05.

In FIG. 1, the gNB 1a-10 corresponds to an evolved node B (eNB) of the existing LTE system. The gNB may be connected to the NR UE through a radio channel, and it can provide a more superior service than that of the existing node B (1a-20). All user traffic is serviced through shared channels in the next-generation mobile communication system. Hence, there is a need for an entity that performs scheduling by collecting status information, such as buffer states, available transmission power states, and channel states of individual UEs, and the gNB 1a-10 takes charge of this. In a typical situation, one gNB controls a plurality of cells. To implement ultra-high-speed data transmission compared with current LTE, a bandwidth beyond the existing maximum bandwidth may be utilized, orthogonal frequency division multiplexing (OFDM) may be used as a radio access technology, and beamforming technology may be additionally used in combination. Further, an adaptive modulation and coding (AMC) scheme determining a modulation scheme and channel coding rate to match the channel state of the UE may be applied. The AMF 1a-05 performs functions such as mobility support, bearer configuration, and quality of service (QoS) configuration. The AMF 1a-05 is an entity taking charge of not only mobility management but also various control functions for the UE, and is connected to a plurality of base stations. In addition, the next-generation mobile communication system may interwork with the existing LTE system, and the AMF is connected to the MME 1a-25 through a network interface. The MME is connected to an eNB 1a-30 being an existing base station. A UE supporting LTE-NR dual connectivity may transmit and receive data while maintaining connectivity to not only the gNB but also the eNB (1a-35).

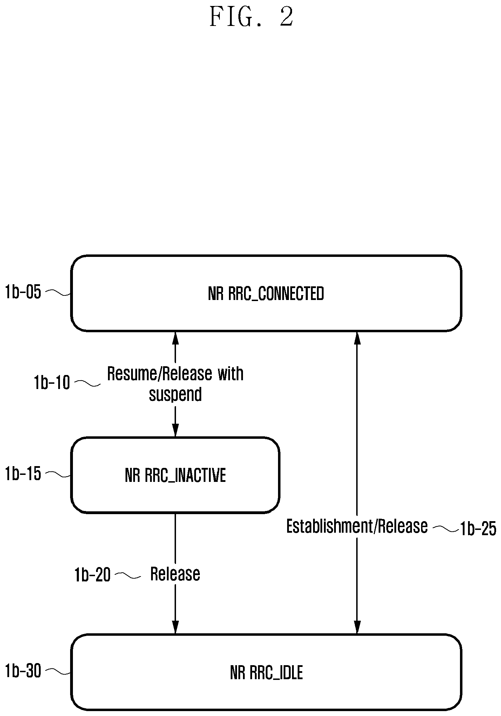

FIG. 2 is a diagram for explaining radio connection state transitions in a next-generation mobile communication system according to an embodiment of the disclosure.

The next-generation mobile communication system has three radio connection states (RRC states). The connected mode (RRC _CONNECTED, 1b-05) is a radio connection state in which the UE can transmit and receive data. The idle mode (RRC _IDLE, 1b-30) is a radio connection state in which the UE monitors whether paging is transmitted to it. These two modes are a radio connection state that is also applied to the existing LTE system, and the detailed description thereof is the same as that of the existing LTE system. In the next-generation mobile communication system, the inactive mode (RRC_INACTIVE, 1b-15) is newly defined as a radio connection state. In this radio connection state, UE contexts are maintained in the base station and the UE, and RAN-based paging is supported. The characteristics of the new radio connection state are listed below.
- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to

The new "inactive" radio connection state may transition to connected mode or idle mode by using a specific procedure. Inactive mode transitions to connected mode according to a resume process, and connected mode transitions to inactive mode by using a release procedure including suspend configuration information (1b-10). The above procedure transmits and receives one or more RRC messages between the UE and the base station, and is composed of one or more steps. Also, after resume, inactive mode can transition to idle mode by using a release procedure (1b-20). Transitions between connected mode and idle mode follow the existing LTE technology. For example, through an establishment procedure or release procedure, the transition between these modes is made (1b-25).

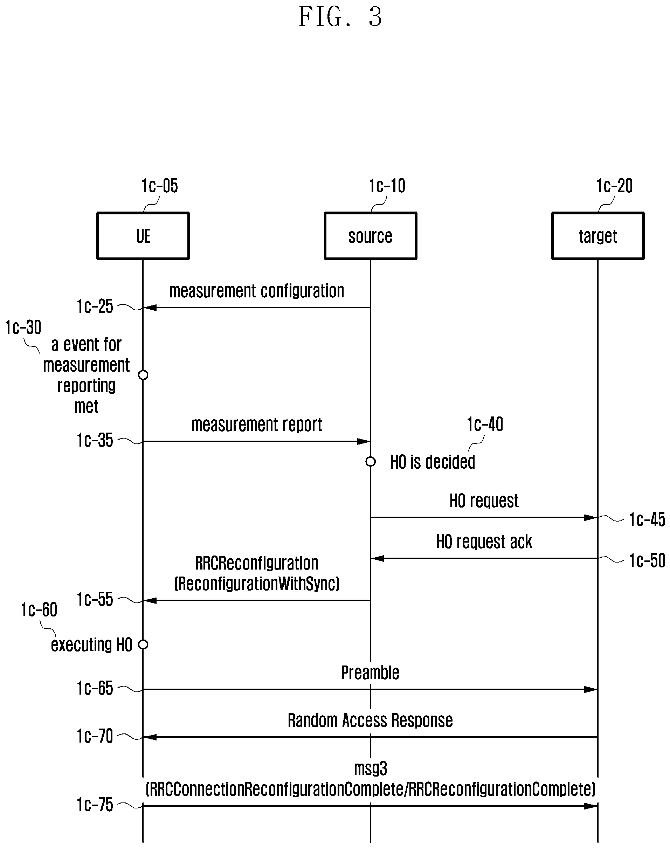

FIG. 3 is a sequence diagram of a process for performing first handover operation in a mobile communication system according to an embodiment of the disclosure.

The UE 1c-05 receives a specific RRC message including measurement configuration information from the source cell 1c-10 (1c-25). The UE measures signal quality of serving and neighbor cells by applying the measurement configuration information, and reports the collected cell measurement information to the source cell (1c-35) periodically or when a preset event occurs (1c-30). The source cell determines whether to trigger first handover operation based on the reported cell measurement information (1c-40). For example, when cell measurement information is reported due to occurrence of event A3 (neighbor becomes offset better than SpCell), the source cell may determine to trigger a first handover. Upon determining to trigger a first handover, the source cell makes a first handover request to one target cell 1c-20 through a specific inter-node message (1c-45). Upon receiving the request, the target cell accepts it and transmits handover configuration information necessary for first handover operation to the source cell (1c-50). The source cell includes the handover configuration information received from the target cell and additional configuration information in a specific RRC message RRCReconfiguration and transmits this RRC message to the UE (1c-55). The configuration information includes target cell ID, frequency information, information required for random access to the target cell (dedicated preamble information, dedicated radio resource information, etc.), transmission power information, and C-RNTI information used in the target cell.

Upon receiving the handover configuration information, the UE immediately performs a random access process to the target cell and starts the T304 timer (1c-60). The UE transmits the provided preamble (1c-65). If no dedicated preamble is provided, one of the preambles used on a contention basis is transmitted. Upon receiving the preamble, the target cell transmits a random access response (RAR) message to the UE (1c-70). The UE transmits msg3 to the target cell by using UL grant information included in the RAR (1c-75). Msg3 includes an RRCConnectionReconfigurationComplete message for an LTE system, and includes an RRCReconfigurationComplete message for an NR system. If the random access process is successfully completed, it is considered that the first handover has been successfully completed, and the UE stops the running T304 timer. If the first handover is not successfully completed until the T304 timer expires, it is considered a handover failure.

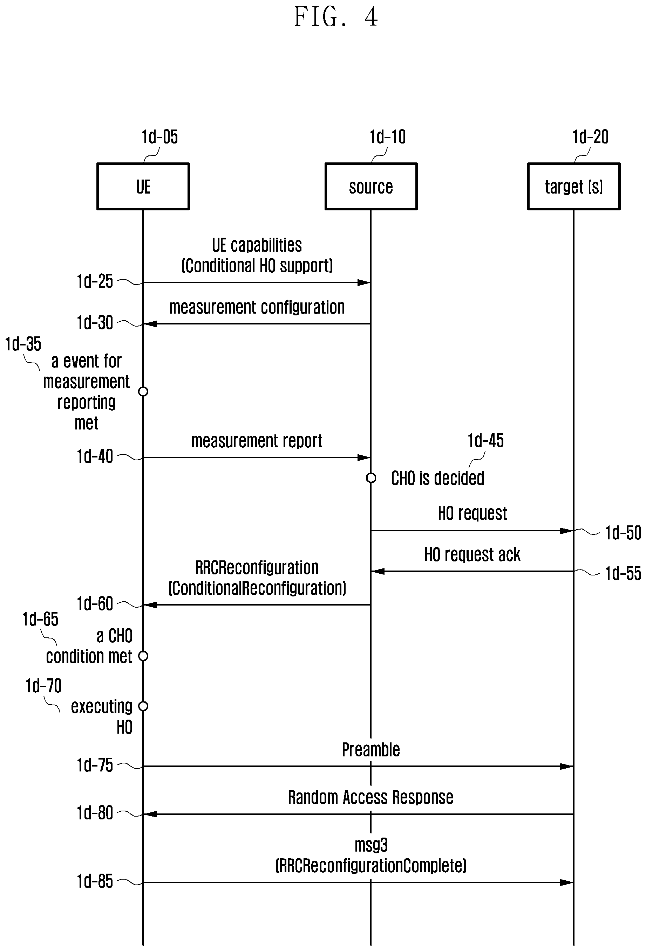

FIG. 4 is a sequence diagram of a process for performing second handover (conditional handover) operation in a mobile communication system according to an embodiment of the disclosure.

The UE 1d-05 reports its capability information to the source cell 1d-10 (1d-25). This capability information includes information indicating whether the UE supports a second handover. The UE receives a specific RRC message including measurement configuration information from the source cell (1d-30). The UE measures signal quality of serving and neighbor cells by applying the measurement configuration information, and reports the collected cell measurement information to the source cell (1d-40) periodically or when a preset event occurs (1d-35). The source cell determines whether to trigger second handover operation based on the reported cell measurement information (1d-45). To configure a second handover, the UE should be able to support the second handover. Upon determining to trigger a second handover, the source cell makes a second handover request to one or more target cells 1d-20 through a specific inter-node message (1d-50). Upon receiving the request, the target cells accept it and transmit handover configuration information necessary for second handover operation to the source cell (1d-55). A target cell that does not accept the request is excluded from second handover operation. The source cell includes the handover configuration information received from the target cells and additional configuration information in a specific RRC message RRCReconfiguration and transmits this RRC message to the UE (1d-60). The configuration information includes target cell IDs, frequency information, configuration information necessary for random access to the target cells (dedicated preamble information and dedicated radio resource information for each target cell), transmission power information, C-RNTI information used in each target cell, and conditions for triggering random access to each target cell. The conditions may be different for each target cell, and a plurality of conditions may be set for one target cell.

Upon receiving the handover configuration information, the UE evaluates whether the provided condition(s) are satisfied (1d-65). If a condition related to a specific target cell is satisfied, the UE performs a random access process to the target cell and starts the T304 timer (1d-70). For example, if event A3 (neighbor becomes offset better than SpCell) is set as one of the above conditions and it is satisfied, the UE transmits the provided preamble to the associated target cell (1d-75). If no dedicated preamble is provided, one of the preambles used on a contention basis is transmitted. The target cell having received the preamble transmits a random access response (RAR) message to the UE (1d-80). The UE transmits msg3 to the target cell by using UL grant information included in the RAR (1d-85). Msg3 includes an RRCConnectionReconfigurationComplete message for an LTE system, and includes an RRCReconfigurationComplete message for an NR system. If the random access process is successfully completed, it is considered that the second handover has been successfully completed, and the UE stops the running T304 timer. If the second handover is not successfully completed until the T304 timer expires, it is considered a handover failure.

When the handover is successfully completed, the UE deletes the handover configuration information. When the source cell receives a handover success report from the target cell, it deletes the context information of the UE. Whether the handover is successful may also be determined by a UE context release message, which is an inter-node message transmitted from the target cell to the source cell. Further, the source cell instructs other candidate target cells included in the handover configuration information to delete the handover configuration information (or, UE context information) (or, notifies that it is no longer valid). The candidate target cells may delete the handover configuration information on their own when a specific time elapses after receiving the handover request, without an indication from the source cell.

When a condition related to a specific target cell is satisfied, the UE may perform a handover to the target cell (1d-70), but the handover may be not successfully completed until T304 expires. In this case, the UE searches for a suitable cell through cell selection operation. If there is a suitable cell, the UE determines whether the found suitable cell is one of the candidate target cells having been configured. If the suitable cell is one of the candidate target cells, the UE performs a handover to the suitable cell. In the disclosure, this is referred to as HO failure recovery. If the suitable cell is not one of the candidate target cells, the UE transmits an RRCReestablishmentRequest message to the suitable cell.

This disclosure proposes a method for minimizing downlink handover signaling in a specific scenario including a subway train, railway train, tram vehicle, or bus.

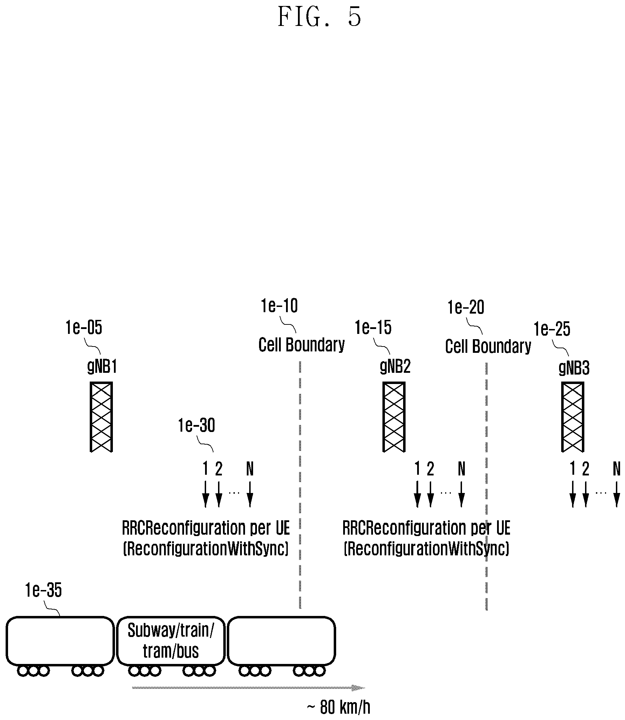

FIG. 5 is a diagram illustrating a case in which handover signaling occurs intensively in a mobile communication system according to an embodiment of the disclosure.

A transportation means 1e-35 such as subway train, railway train, tram vehicle or bus is characterized by carrying many passengers and traveling at high speed along a preset course. Hence, when the transportation means moves between cells, multiple UEs used by passengers should simultaneously perform a handover. For individual UEs to perform a handover, base stations 1e-05, 1e-15, 1e-25 should transmit configuration information necessary for handover execution to the UEs through RRC messages. This rapidly increases handover signaling (1e-30) in cell boundary areas 1e-10 and 1e-20, which may overload the mobile communication network. That is, phenomena such as increased signal interference, shortage of radio resources, and transmission delays may arise in cell boundary areas. For this reason, this disclosure proposes a multi-hop conditional handover to minimize transmission of RRCReconfiguration messages including handover configuration information.

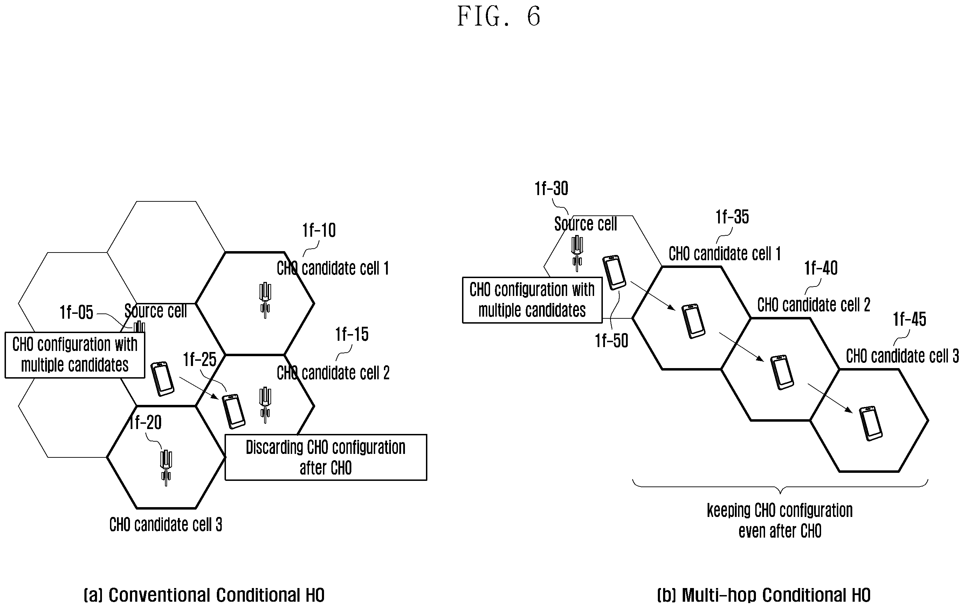

FIG. 6 is a diagram for conceptually explaining a multi-hop conditional handover in a mobile communication system according to an embodiment of the disclosure.

In a legacy conditional handover, up to 8 candidate target cells 1f-10, 1f-15, 1f-20 can be configured, and up to 2 conditions can be set for each candidate cell. Typically, the candidate target cells are cells around the source cell 1f-05. When the source cell provides configuration information for a conditional handover to the UE 1f-25, the UE determines whether the corresponding conditions for the candidate target cells indicated in the configuration information are satisfied. The UE performs a handover to one of the candidate target cells that satisfies a corresponding condition, and it deletes the received handover configuration information when the handover is successfully completed. Therefore, if a situation requiring a subsequent handover arises, the base station should trigger a handover again and provide the corresponding configuration information to the UE.

The multi-hop conditional handover proposed in this disclosure is characterized by not deleting conditional handover configuration information corresponding to a specific candidate target cell even after completion of the handover, but using it in a subsequent handover. That is, the source cell 1f-30 considers not only the neighbor cell 1f-35 but also second or third tier cells 1f-40 and 1f-45 as candidate target cells for a conditional handover, and provides the corresponding conditional handover configuration information to the UE. Further, the UE 1f-50 does not delete the received conditional handover configuration information and continues to use it even after the handover is completed. The UE may use the stored configuration information to perform a handover on its own if a condition is satisfied. In addition, as the conditional handover configuration information is not deleted even after the handover is completed, the UE does not have to receive an RRCReconfiguration message including handover configuration information from the current serving cell.

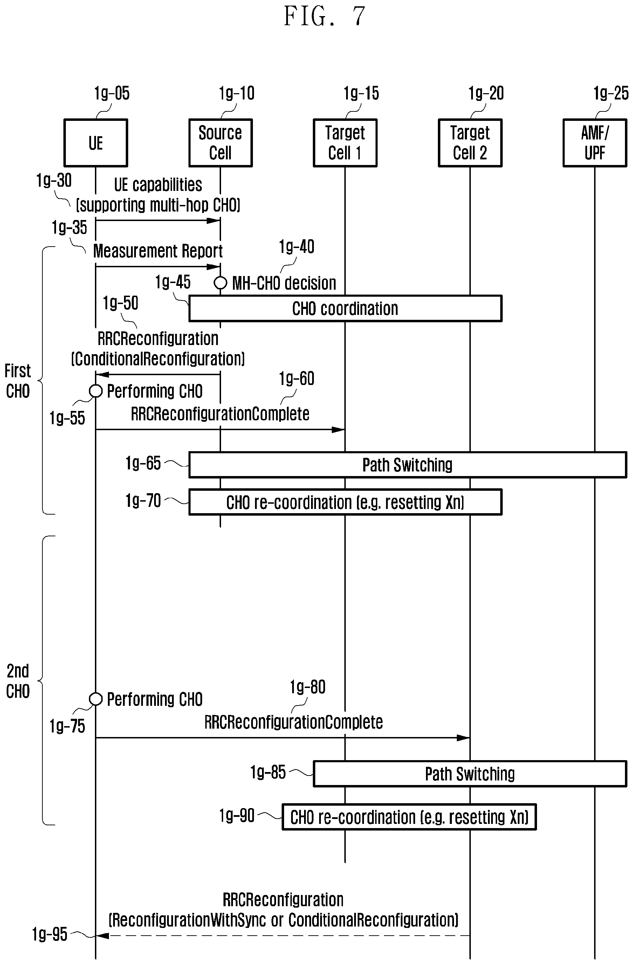

FIG. 7 is a sequence diagram of a process for performing multi-hop conditional handover operation in a mobile communication system according to an embodiment of the disclosure.

The UE 1g-05 transmits its capability information to the source cell 1g-10 (1g-30). This capability information includes an indication indicating whether a multi-hop conditional handover is supported. The UE may report cell measurement information to the source cell (1g-35). The source cell determines to trigger a multi-hop conditional handover in consideration of the UE capability information and cell measurement information (1g-40). The source cell negotiates with specific candidate target cells 1g-15 and 1g-20 to execute a multi-hop conditional handover (1g-45). The source cell transmits a handover request message to the candidate target cells, and the handover request message includes an indication instructing multi-hop conditional handover execution. Also, the source cell may request specific configuration information required to execute a multi-hop conditional handover from each candidate target cell. During this coordination process, an Xn interface is also established between the source cell and each candidate target cell. Each candidate target cell sets an internal timer corresponding to the multi-hop conditional handover. For example, this timer may be used to determine the time duration for maintaining configuration information of the multi-hop conditional handover. Each target cell having received the handover request message transmits, to the source cell, a handover request response message including specific configuration information necessary for multi-hop conditional handover execution. The source cell transmits, to the UE, an RRCReconfiguration message including configuration information determined by itself and the configuration information provided by the candidate target cells (1g-50). Multi-hop conditional handover and legacy conditional handover may be configured at the same time for one UE; an indication is provided to the UE indicating whether the conditional handover applied to each candidate target cell is a legacy conditional handover or a multi-hop conditional handover. The above message includes target cell IDs, frequency information, configuration information required for random access to the target cells (dedicated preamble information and dedicated radio resource information for each target cell), transmission power information, C-RNTI information used in each target cell, and conditions for triggering random access to each target cell. Further, an indication indicating whether configuration information associated with each candidate target cell corresponds to a multi-hop conditional handover may be included. For example, a CondReconfigToAddMod IE includes conditions and handover configuration information for one candidate target cell. In the above IE, an indication indicating whether the corresponding candidate target cell is associated with a multi-hop conditional handover may be added as follows.

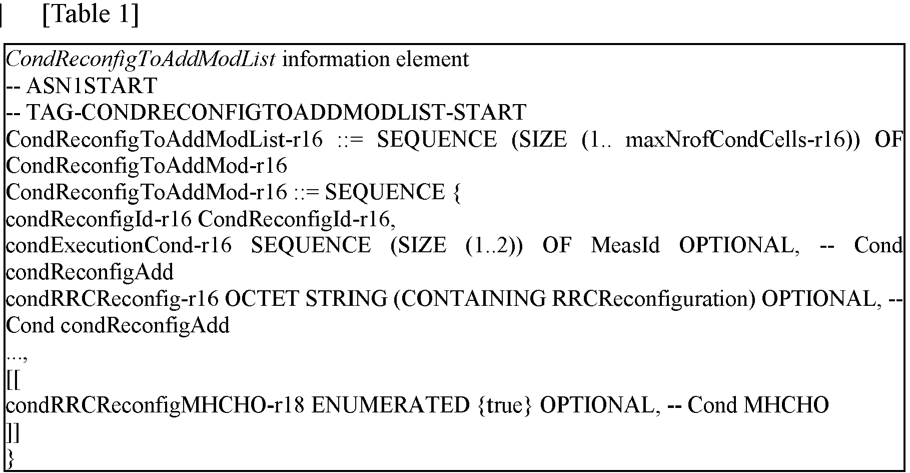

The UE does not delete the handover configuration information for the candidate target cell corresponding to the indication even after the handover is completed. For instance, a CondReconfigToAddMod IE including the field condRRCReconfigMHCHO indicating a multi-hop conditional handover is not deleted even after the corresponding handover is completed. On the other hand, a CondReconfigToAddMod IE that do not include the above field is deleted.

The UE having received the handover configuration information evaluates whether the provided conditions are satisfied. If a condition related to a specific target cell is satisfied, the UE performs a random access process to the target cell and starts the T304 timer. For example, if event A3 (neighbor becomes offset better than SpCell) is set as one of the above conditions and it is satisfied, the UE transmits the provided preamble to the associated target cell 1g-15. If no dedicated preamble is provided, one of the preambles used on a contention basis is transmitted. The target cell having received the preamble transmits a random access response (RAR) message to the UE. The UE transmits msg3 to the target cell by using UL grant information included in the RAR. Msg3 includes an RRCReconfigurationComplete message (1g-60). If the random access process is successfully completed, it is considered that the conditional handover has been successfully completed, and the UE stops the running T304 timer. Even if the handover is successfully completed, the UE maintains the configuration information related to a multi-hop conditional handover as it is. However, the configuration information related to a legacy conditional handover having been configured together is deleted. In addition, the handover configuration information for the candidate target cell to which a multi-hop conditional handover has been attempted and succeeded, that is, the current PCell, may be deleted. Whether to delete the handover configuration information for the candidate target cell to which a multi-hop conditional handover has been attempted and succeeded may be set by the network.

When the handover is completed, the source cell, target cell 1g-15, and AMF/UPF perform a path switching operation (1g-65). The source cell transmits multi-hop conditional handover configuration information to the target cell 1g-15, that is, a new source cell, and the new source cell sets an Xn interface with candidate target cells involved in the multi-hop conditional handover based on the configuration information (1g-70). Through the above process, the candidate target cells may recognize a change toward the new source cell. The previous source cell may delete the handover configuration information after the path switching process is completed and the multi-hop conditional handover configuration information is transferred to the new source cell.

If the multi-hop conditional handover is not successfully completed until the T304 timer expires, it is considered a handover failure. In this case, the UE searches for a suitable cell through cell selection operation. If there is a suitable cell, the UE determines whether the found suitable cell is one of the candidate target cells having been configured. Here, the candidate target cell is involved in either a legacy conditional handover or a multi-hop conditional handover. If the suitable cell is one of the candidate target cells, the UE performs a handover to the suitable cell. If the suitable cell is not one of the candidate target cells, the UE transmits an RRCReestablishmentRequest message to the suitable cell. When the RRC reestablishment process is successfully completed, the UE deletes the configuration information related to a legacy conditional handover, but does not delete the configuration information related to a multi-hop conditional handover.

After the handover is completed, the UE that stores configuration information related to a multi-hop conditional handover continues to evaluate whether a condition indicated in the configuration information is satisfied. If a condition is satisfied, the UE performs a handover to the target cell 1g-20 associated with the condition (1g-75). When the handover is completed, the source cell, target cell 1g-20, and AMF/UPF perform a path switching operation (1g-85). The source cell transmits multi-hop conditional handover configuration information to the target cell 1g-20, that is, a new source cell, and the new source cell sets an Xn interface with candidate target cells involved in the multi-hop conditional handover (1g-90).

After receiving multi-hop conditional handover configuration information from the previous source cell, the new source cell may modify and supplement the configuration information. That is, some of the previous candidate target cells may be excluded from the candidate group, or new candidate target cells may be added. The new source cell may release a previously configured multi-hop conditional handover. If such a change is necessary, the new source cell transmits a handover request message for coordination with a new candidate target cell, or notifies a previous candidate target cell that the multi-hop conditional handover has been released. Further, a candidate target cell may leave the candidate group for a multi-hop conditional handover in consideration of its own internal causes, for example, a shortage of radio resources. Here, the candidate target cell notifies this to the source cell and releases radio resources and configuration information related to the multi-hop conditional handover.

The source cell may reconfigure a changed multi-hop conditional handover in a UE for which a multi-hop conditional handover has been configured (1g-95). The source cell may use a condReconfigToRemoveList IE when deleting a specific candidate target cell, and use a condReconfigToAddModList IE when adding a new candidate target cell or modifying configuration information of an existing candidate target cell. The source cell may configure a normal handover in a UE for which a multi-hop conditional handover has been configured, in which case the UE should immediately perform the normal handover.

The UE may delete the stored configuration information related to a multi-hop conditional handover in the following cases.
- A case where an instruction is received from the source cell to delete configuration information related to a multi-hop conditional handover. The source cell may instruct a UE to delete configuration information for all or specific candidate target cells.
- A case where the UE transitions from connected mode (RRC_CONNECTED state) to idle mode (RRC_IDLE state) or inactive mode (RRC_INACTIVE state).
- After a handover is completed, the UE may delete configuration information related to the current serving cell to which the handover has been attempted. Whether to delete or not may be set by the network.

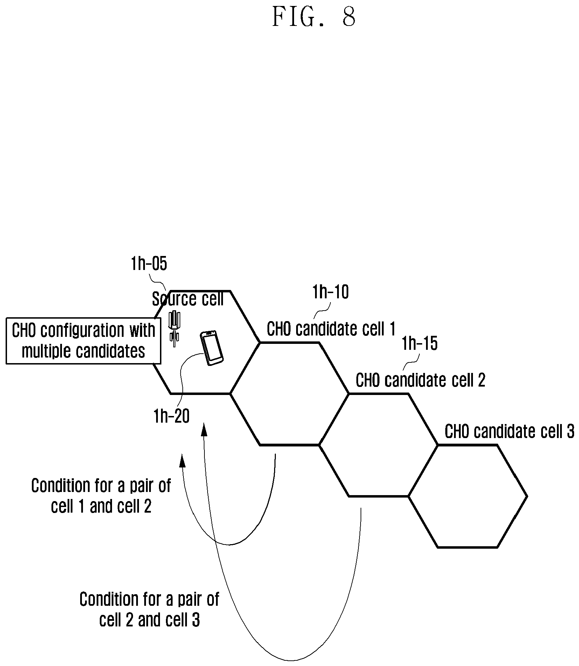

FIG. 8 is a diagram illustrating a method of providing condition-related configuration information in a multi-hop conditional handover according to an embodiment of the disclosure.

In a legacy conditional handover, the source cell determines candidate target cells and receives configuration information necessary for the handover from the candidate target cells. Meanwhile, the source cell determines conditions corresponding to each target cell. In a legacy conditional handover, as candidate target cells are adjacent to the source cell, it is desirable for the source cell to determine the conditions.

On the other hand, in a multi-hop conditional handover, the source cell should consider not only neighboring candidate target cells but also non-neighboring candidate target cells such as second or third tier cells. In this case, it may be difficult for the source cell to determine optimal conditions corresponding to a non-neighboring candidate target cell. Therefore, this disclosure proposes a method for determining conditions corresponding to each candidate target cell in a multi-hop conditional handover.

### [First option]

The source cell that configures or changes a multi-hop conditional handover determines condition information for all candidate target cells. Here, one candidate target cell may recommend another candidate target cell to the source cell, and may provide information necessary for the source cell to determine the conditions, for example, serving and neighbor cell measurement information and location information in the vicinity of the cell area.

### [Second option]

The source cell that configures or changes a multi-hop conditional handover may not have sufficient information to determine conditions for candidate target cells other than neighboring candidate target cells. Hence, candidate target cells may provide appropriate conditions according to a request of the source cell.

To this end, the source cell may request a candidate target cell to provide appropriate condition information by using a handover request message. The condition may be for a candidate target cell and another candidate target cell adjacent to it. For example, the source cell 1h-05 may request a first candidate target cell 1h-10 to provide conditions that can be applied to perform a conditional handover from the first candidate target cell to a second candidate target cell 1h-15. Here, when requesting the condition, the source cell needs to notify information about the second candidate target cell to the first candidate target cell. Upon receiving the request, the first candidate target cell transmits, to the source cell, optimal conditions for performing a conditional handover. As another alternative, when the source cell requests a condition, a candidate target cell that has received the request may provide the source cell with information about its neighbor cells and conditions corresponding to the neighbor cells. The source cell finally determines a list of candidate target cells and the conditions corresponding to each candidate target cell based on the information provided from the candidate target cells, and transmits the same to the UE 1h-20 by using a RRCReconfiguration message.

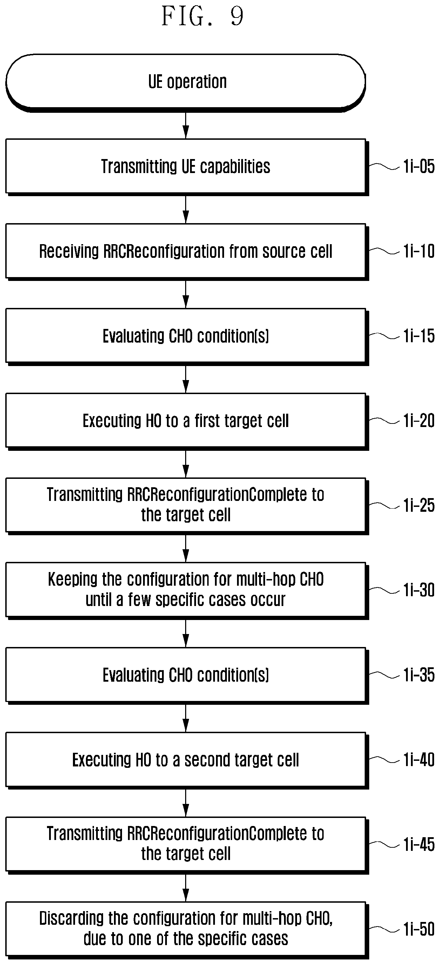

FIG. 9 is a flowchart of UE operation for performing multi-hop conditional handover in a mobile communication system according to an embodiment of the disclosure.

At step 11-05, the UE transmits its capability information to the base station.

At step 11-10, the UE receives an RRCReconfiguration message containing configuration information for a multi-hop conditional handover from the base station.

At step 1i-15, the UE evaluates whether conditions are satisfied according to condition information included in the received configuration information.

At step 11-20, as a condition corresponding to a first target cell is satisfied, the UE performs a handover to the first target cell.

At step 1i-25, the UE transmits an RRCReconfigurationComplete message while performing a random access process to the first target cell. When the random access is successfully completed, the UE considers that the handover being executed has been successfully completed.

At step 1i-30, the UE maintains the multi-hop conditional handover configuration information without deleting it. In a specific case or when a specific condition is satisfied, configuration information for all or some of the candidate target cells may be deleted.

At step 1i-35, the UE evaluates whether a condition is satisfied according to the condition information included in the stored configuration information.

At step 1i-40, as the condition corresponding to a second target cell is satisfied, the UE performs a handover to the second target cell.

At step 1i-45, the UE transmits an RRCReconfigurationComplete message while performing a random access process to the second target cell. When the random access is successfully completed, the UE considers that the handover being executed has been successfully completed.

At step 1i-50, the UE deletes configuration information for all or some of the candidate target cells in a specific case or when a specific condition is satisfied.

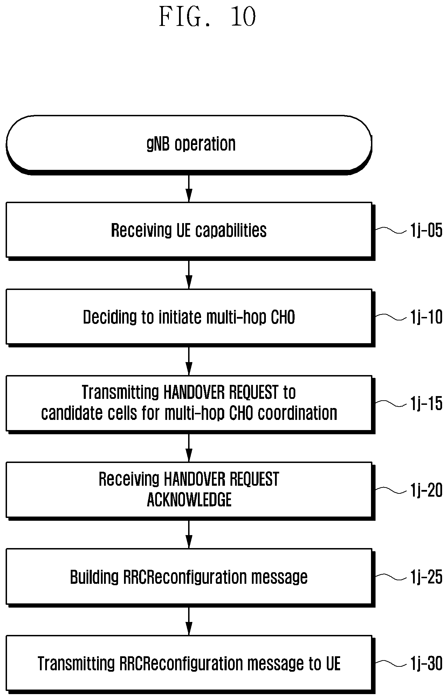

FIG. 10 is a flowchart of base station operation for performing multi-hop conditional handover in a mobile communication system according to an embodiment of the disclosure.

At step 1j-05, the base station receives capability information from a UE.

At step 1j-10, the base station determines to trigger a multi-hop conditional handover to the UE.

At step 1j-15, the base station transmits a handover request message to candidate target cells.

At step 1j-20, the base station receives a handover request response message from the candidate target cells.

At step 1j-25, the base station composes configuration information for a multi-hop conditional handover based on the configuration information received from the candidate target cells, and creates an RRCReconfiguration message including the same.

In step 1j-30, the base station transmits the RRCReconfiguration message to the UE.

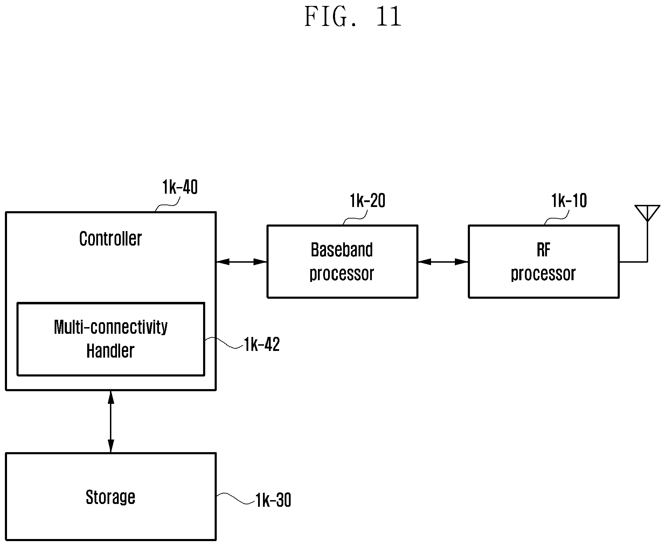

FIG. 11 is a block diagram illustrating the internal structure of a UE to which the disclosure is applied.

With reference to the drawing, the UE includes a radio frequency (RF) processor 1k-10, a baseband processor 1k-20, a storage 1k-30, and a controller 1k-40.

The RF processor 1k-10 performs a function for transmitting and receiving a signal through a radio channel, such as signal band conversion and amplification. That is, the RF processor 1k-10 performs up-conversion of a baseband signal provided from the baseband processor 1k-20 into an RF-band signal and transmits it through an antenna, and performs down-conversion of an RF-band signal received through an antenna into a baseband signal. For example, the RF processor 1k-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Also, the RF processor 1k-10 may include a plurality of RF chains. Further, the RF processor 1k-10 may perform beamforming. For beamforming, the RF processor 1k-10 may adjust phases and magnitudes of individual signals transmitted and received through the plural antennas or antenna elements. Further, the RF processor may perform MIMO, and may receive several layers during an MIMO operation.

The baseband processor 1k-20 performs conversion between a baseband signal and a bit stream in accordance with the physical layer specification of the system. For example, during data transmission, the baseband processor 1k-20 generates complex symbols by encoding and modulating a transmission bit stream. Further, during data reception, the baseband processor 1k-20 may reconstruct a reception bit stream by demodulating and decoding a baseband signal provided from the RF processor 1k-10. For example, in the case of utilizing orthogonal frequency division multiplexing (OFDM), for data transmission, the baseband processor 1k-20 generates complex symbols by encoding and modulating a transmission bit stream, maps the complex symbols to subcarriers, and composes OFDM symbols through inverse fast Fourier transform (IFFT) operation and cyclic prefix (CP) insertion. Further, for data reception, the baseband processor 1k-20 may divide a baseband signal provided from the RF processor 1k-10 in units of OFDM symbols, restore the signals mapped to subcarriers through fast Fourier transform (FFT) operation, and reconstruct the reception bit stream through demodulation and decoding.

The baseband processor 1k-20 and the RF processor 1k-10 transmit and receive signals as described above. Hence, the baseband processor 1k-20 and the RF processor 1k-10 may be called a transmitter, a receiver, a transceiver, or a communication unit. Further, to support different radio access technologies, at least one of the baseband processor 1k-20 or the RF processor 1k-10 may include a plurality of communication modules. In addition, to process signals of different frequency bands, at least one of the baseband processor 1k-20 or the RF processor 1k-10 may include different communication modules. For example, the different radio access technologies may include a wireless LAN (e.g., IEEE 802.11), a cellular network (e.g., LTE), and the like. In addition, the different frequency bands may include a super high frequency (SHF) band (e.g., 2.NRHz, NRhz) and a millimeter wave (mmWave) band (e.g., 60 GHz).

The storage 1k-30 stores data such as basic programs, application programs, and configuration information for the operation of the UE. In particular, the storage 1k-30 may store information about a second access node that performs wireless communication using a second radio access technology. The storage 1k-30 provides stored data in response to a request from the controller 1k-40.

The controller 1k-40 controls the overall operation of the UE. For example, the controller 1k-40 transmits and receives signals through the baseband processor 1k-20 and the RF processor 1k-10. Further, the controller 1k-40 writes or reads data to or from the storage 1k-40. To this end, the controller 1k-40 may include at least one processor. For example, the controller 1k-40 may include a communication processor (CP) for controlling communication and an application processor (AP) for controlling higher layers such as application programs.

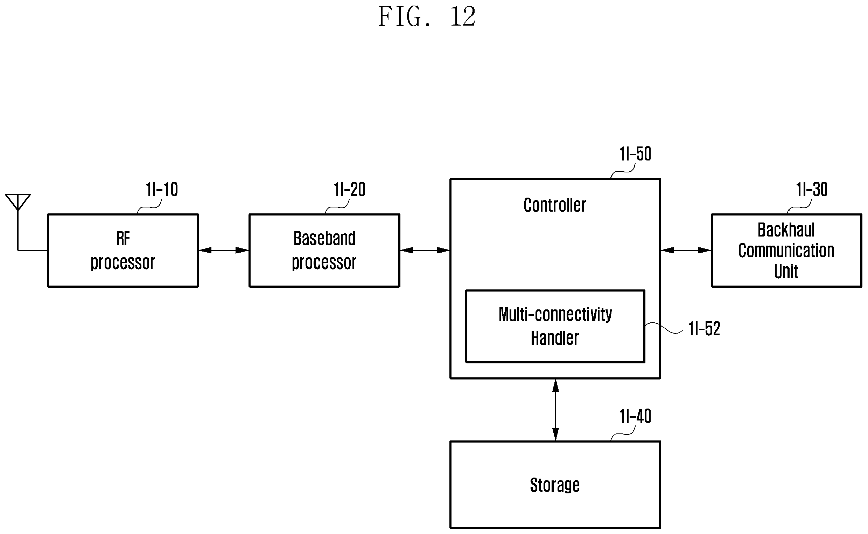

FIG. 12 is a block diagram illustrating the configuration of a base station according to the disclosure.

As shown in the drawing, the base station includes an RF processor 11-10, a baseband processor 11-20, a backhaul communication unit 11-30, a storage 11-40, and a controller 11-50.

The RF processor 11-10 performs a function for transmitting and receiving a signal through a radio channel, such as signal band conversion and amplification. That is, the RF processor 11-10 performs up-conversion of a baseband signal provided from the baseband processor 11-20 into an RF-band signal and transmits the converted signal through an antenna, and performs down-conversion of an RF-band signal received through an antenna into a baseband signal. For example, the RF processor 11-10 may include a transmission filter, a reception filter, an amplifier, a mixer, an oscillator, a DAC, and an ADC. Although only one antenna is illustrated in the drawing, a first access node may be provided with a plurality of antennas. Additionally, the RF processor 11-10 may include a plurality of RF chains. Further, the RF processor 11-10 may perform beamforming. For beamforming, the RF processor 11-10 may adjust phases and amplitudes of individual signals transmitted and received through plural antennas or antenna elements. The RF processor 11-10 may perform downlink MIMO operation by transmitting one or more layers.

The baseband processor 11-20 performs conversion between a baseband signal and a bit stream in accordance with the physical layer specification of a first radio access technology. For example, for data transmission, the baseband processor 11-20 generates complex symbols by encoding and modulating a transmission bit stream. Further, for data reception, the baseband processor 11-20 reconstructs a reception bit stream by demodulating and decoding a baseband signal provided from the RF processor 11-10. For example, in the case of utilizing OFDM, for data transmission, the baseband processor 11-20 generates complex symbols by encoding and modulating a transmission bit stream, maps the complex symbols to subcarriers, and composes OFDM symbols through IFFT operation and CP insertion. Further, for data reception, the baseband processor 11-20 divides a baseband signal provided from the RF processor 11-10 in units of OFDM symbols, restores the signals mapped to subcarriers through FFT operation, and reconstructs the reception bit stream through demodulation and decoding. The baseband processor 11-20 and the RF processor 11-10 transmit and receive signals as described above. Hence, the baseband processor 11-20 and the RF processor 11-10 may be called a transmitter, a receiver, a transceiver, a communication unit, or a wireless communication unit.

The backhaul communication unit 11-30 provides an interface for communication with other nodes in the network. That is, the backhaul communication unit 11-30 converts a bit stream, which is to be transmitted from the primary base station to another node, for example, a secondary base station or the core network, into a physical signal, and converts a physical signal received from another node into a bit stream.

The storage 11-40 stores data such as basic programs, application programs, and configuration information for the operation of the primary base station. In particular, the storage 11-40 may store information on a bearer allocated to a connected UE and measurement results reported from the connected UE. Further, the storage 11-40 may store information used as a criterion for determining whether to provide or suspend multi-connectivity to the UE. In addition, the storage 11-40 provides stored data in response to a request from the controller 11-50.

The controller 11-50 controls the overall operation of the primary base station. For example, the controller 11-50 transmits and receives signals through the baseband processor 11-20 and the RF processor 11-10 or through the backhaul communication unit 11-30. In addition, the controller 11-50 writes or reads data to or from the storage 11-40. To this end, the controller 11-50 may include at least one processor.

In the embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Meanwhile, specific embodiments have been described in the detailed description of the disclosure, but various modifications are possible without departing from the scope of the disclosure. Therefore, the scope of the disclosure should not be limited to those described embodiments, but should be determined by not only the appended claims but also their equivalents.

## Claims

1. A method of a terminal in a wireless communication system, the method comprising:
receiving a first control message for a handover to one or more target cells from a source cell;
performing, in case that a condition for a handover to one of the target cells is satisfied, a handover to the target cell; and
maintaining, after the handover to the target cell is completed, without deleting, handover configuration information related to a multi-hop conditional handover (MH-CHO) among the handover configuration information for each of the target cells included in the first control message.

2. The method of claim 1, wherein:
the first control message includes handover configuration information for each of the target cells; and
the handover configuration information includes an indication indicating whether a conditional handover to an associated target cell corresponds to a MH-CHO.

3. The method of claim 1, further comprising, in case that the handover to the target cell has failed:
searching for a suitable cell through cell selection operation;
determining, in case that a suitable cell is found, whether the suitable cell is one of the target cells having been configured through the first control message; and
performing, in case that the suitable cell is one of the target cells, a handover to the suitable cell.

4. The method of claim 1, further comprising reconfiguring, in case of receiving a second control message for reconfiguring the stored handover configuration information related to a MH-CHO from the target cell to which the handover is completed, the stored handover configuration information related to the MH-CHO.

5. The method of claim 1, further comprising performing, in case of receiving a third control message indicating a normal handover from the target cell to which the handover is completed, a normal handover according to the normal handover indication.

6. A method performed by a base station in a wireless communication system, the method comprising:
determining to trigger a multi-hop conditional handover (MH-CHO) to a terminal;
transmitting a handover request message including an indication instructing execution of a MH-CHO to one or more candidate target base stations;
receiving a handover request response message from the candidate target base stations in response to the handover request message;
generating, based on the handover request response message, a first control message for the terminal to execute a handover to the candidate target base stations; and
transmitting the first control message to the terminal.

7. The method of claim 6, wherein:
the first control message includes handover configuration information for each of the candidate target base stations;
the handover configuration information includes a condition for executing a handover to an associated candidate target base station and an indication indicating whether a conditional handover to the associated candidate target base station corresponds to a MH-CHO; and
the condition for executing a handover to an associated candidate target base station is determined by one of a first scheme in which the base station determines handover execution conditions for all candidate target base stations, and a second scheme in which the base station transmits a handover request message to at least one candidate target base station, receives condition information from the candidate target base stations based on the handover request message, and determines handover execution conditions for the candidate target base stations based on the received condition information.

8. The method of claim 7, further comprising, in case of receiving a handover success message as to the terminal from a base station to which the terminal has completed a handover:
transferring, to the base station to which the terminal has completed a handover, handover configuration information whose indication indicates a correspondence to a MH-CHO among the handover configuration information for each of the candidate target base stations; and
deleting the handover configuration information for each of the candidate target base stations.

9. A terminal in a wireless communication system, comprising:
a transceiver capable of transmitting and receiving at least one signal; and
a controller coupled to the transceiver,
wherein the controller is configured to receive a first control message for a handover to one or more target cells from a source cell, perform, in case that a condition for a handover to one of the target cells is satisfied, a handover to the target cell, and maintain, after the handover to the target cell is completed, without deleting, handover configuration information related to a multi-hop conditional handover (MH-CHO) among the handover configuration information for each of the target cells included in the first control message.

10. The terminal of claim 9, wherein:
the first control message includes handover configuration information for each of the target cells; and
the handover configuration information includes an indication indicating whether a conditional handover to an associated target cell corresponds to a MH-CHO.

11. The terminal of claim 9, wherein in case that the handover to the target cell has failed, the controller is configured to search for a suitable cell through cell selection operation, determine, in case that a suitable cell is found, whether the suitable cell is one of the target cells having been configured through the first control message, and perform, in case that the suitable cell is one of the target cells, a handover to the suitable cell.

12. The terminal of claim 9, wherein in case of receiving a second control message for reconfiguring the stored handover configuration information related to a MH-CHO from the target cell to which the handover is completed, the controller is configured to reconfigure the stored handover configuration information related to the MH-CHO.

13. The terminal of claim 9, wherein in case of receiving a third control message indicating a normal handover from the target cell to which the handover is completed, the controller is configured to perform a normal handover according to the normal handover indication.

14. A base station in a wireless communication system, comprising:
a transceiver capable of transmitting and receiving at least one signal; and
a controller coupled to the transceiver,
wherein the controller is configured to determine to trigger a multi-hop conditional handover (MH-CHO) to a terminal, transmit a handover request message including an indication instructing execution of a MH-CHO to one or more candidate target base stations, receive a handover request response message from the candidate target base stations in response to the handover request message, generate, based on the handover request response message, a first control message for the terminal to execute a handover to the candidate target base stations, and transmit the first control message to the terminal.

15. The base station of claim 14, wherein:
the first control message includes handover configuration information for each of the candidate target base stations;
the handover configuration information includes a condition for executing a handover to an associated candidate target base station and an indication indicating whether a conditional handover to the associated candidate target base station corresponds to a MH-CHO;
the condition for executing a handover to an associated candidate target base station is determined by one of a first scheme in which the base station determines handover execution conditions for all candidate target base stations, and a second scheme in which the base station transmits a handover request message to at least one candidate target base station, receives condition information from the candidate target base stations based on the handover request message, and determines handover execution conditions for the candidate target base stations based on the received condition information; and
in case of receiving a handover success message as to the terminal from a base station to which the terminal has completed a handover, the controller is configured to transfer, to the base station to which the terminal has completed a handover, handover configuration information whose indication indicates a correspondence to a MH-CHO among the handover configuration information for each of the candidate target base stations, and delete the handover configuration information for each of the candidate target base stations.
